# EUROPEAN PATENT APPLICATION

(11) **EP 1 696 575 A1**
(43) Date of publication of application: **30.08.2006**
(21) Application number: 04807088.2
(22) Date of filing: 15.12.2004
(51) Int. Cl.: H04B 1/06, H04H 1/00, H04N 5/44

(54) **RECEIVER APPARATUS AND RECEIVING METHOD**

(30) Priority: 16.12.2003 EP 03029017
(71) Applicant: MATSUSHITA ELECTRIC INDUSTRIAL CO., LTD., Kadoma-shi, Osaka 571-8501 (JP)
(72) Inventor: SCHEID, Albrecht., IP dev Center, Osaka-shi, Osaka 540-6319 (JP)
(74) Representative: Grünecker, Kinkeldey, Stockmair & Schwanhäusser Anwaltssozietät
(86) International application number: PCT/JP2004/018729
(87) International publication number: WO 2005/060113

(57) **Abstract**

The present invention relates to a battery-type DVB-H mobile receiver. DVB-H service data are transmitted on transmission channels as bursts with off times of several seconds being provided in between. The off times are used for background reception. During background reception, information from another service is acquired and stored in a memory of the receiver. When a user switches to another service, information stored in relation to this service is immediately displayed for filling the time until a first burst of the new service is received. The acquired information may include text or still images. This background reception system can be performed while using a single tuner/demodulator within the receiver for scanning other services and preferably updating acquired information. Update of respective services that are switched during background reception and possibly acquired information is performed depending on current battery conditions, equipments of the receiver and/or preference of the user.

## Description

### FIELD OF THE INVENTION

The present invention relates to a method for transmitting and a method for receiving data through transmission channels. The present invention particularly relates to a method for transmitting and a method for receiving a plurality of data through a single transmission channel by using a specific transmission system.

### BACKGROUND ART

Transmission standards for digital broadcast systems have been standardized for respective transmission paths such as ground wave, satellite and cable. The standardized digital terrestrial broadcasting system DVB-T (Digital Video Broadcasting-Terrestrial) has mainly targeted at fixed reception for household and office use. However, when one tries to receive digital terrestrial broadcast by means of a handheld device, it is impossible to watch for a long period of time due to a limited battery capacity.

For such a purpose, it has recently been formulated a new transmission standard called DVB-H (Digital Video Broadcasting-Handheld). It is supposed to be used in handheld devices such as mobile phones.

The DVB-H standard is based on the existing digital terrestrial broadcast standard DVB-T While the DVB-T usually requires a bandwidth of not less than 3 Mbps per one service, relatively small transmission capacities will suffice for services used in handheld devices since screens of receivers are small. A maximum bit rate required for sending videos employing high video compression techniques such as MPEG-4 is approximately several hundreds of kbps. The DVB-H transmission standard is basically a system based on the DVB-T standard wherein time division multiplexing (TDM) is performed per each service. Due to such a fact, the average transmission rate for each service is small while momentary transmission rates may be high. Respective services that have been time division multiplexed are referred to as time slices or bursts.

Respective DVB-H services are transmitted in form of bursts, and respective bursts are groups of a plurality of symbols and are of predetermined burst lengths. Particular services are sent out as bursts at send out cycles of predetermined intervals. Different services are similarly transmitted as bursts at other periods. For this reason, when specific services are received, it is possible to switch the power of the front end OFF at sections at which the services are not transferred. For reducing power consumption on receiving sides, burst intervals shall be set as large as possible. With this arrangement, it is possible to switch the power of the front end OFF for a long period of time. When the OFF time is set to approximately 5 seconds and the ON time less than 0.5 second, it is possible to achieve power saving of approximately 90%.

### SUMMARY OF THE INVENTION

However, when the burst interval becomes approximately 5 seconds, a drawback is presented in that a switching time between services will become longer. When switching to another service that is transmitted on the same channel or a different channel, an image is first reproduced only after receipt of the first burst. The user thus needs to await transmission of the first burst of the services each time a new service is selected. It is accordingly impossible to realize fast switching between various services.

While various services are transmitted on a same channel in case of DVB-H services, identical services are sent using different channels in adjacent cells. It is generally the case that a plurality of different transmission channels are received at service area boundaries. When a DVB-H mobile receiver is moving from the present cell to an adjacent cell, the reception frequency is accordingly changed. Switching is performed in an overlapping area between both cells. Handover is performed without a user of the DVB-H service being aware.

With regards to such transmission systems, it is an object of the present invention to provide a receiver and a receiving method with which it is possible to perform background reception for performing smooth switching between different services.

According to the present invention, there is provided a receiving apparatus that receives a signal corresponding to a service selected among a plurality of services according to a plurality of input signals respectively including information related to a plurality of data respectively corresponding to the plurality of services. The plurality of input signals are transmitted on a same first frequency channel on a time axis in form of bursts respectively. The apparatus includes a receiving unit, a demodulating unit, an extracting unit, and a memory. The receiving unit can receive input signals corresponding to a selected service. The receiving unit receives input signals corresponding to services other than the selected one during a period of time in which no input signals corresponding to the selected service are received. The demodulating unit can output the received input signals after demodulation. The demodulating unit demodulates the received input signals corresponding to services other than the selected one. The extracting unit can extract zapping data related to services other than the selected one based on a result of demodulating the input signals corresponding to services other than the selected one. The memory can store the zapping data.

Further, according to the present invention, when selection of the service is changed, the stored zapping data corresponding to the changed service is output.

Still further, according to the present invention, when input signals corresponding to the changed service are received during output of the stored zapping data corresponding to the changed service, the demodulating unit outputs the received input signals corresponding to the changed service after demodulation.

Yet further, according to the present invention, processes of receiving input signals corresponding to services other than the selected service performed by the receiving unit is performed during periods in which no input signals corresponding to the selected service are received and at predetermined cycles, and the memory updates the stored zapping data.

Further, according to the present invention, the plurality of input signals further include a plurality of signals that are respectively transmitted in form of bursts on a second frequency channel that is different from the first frequency channel on a time axis. The apparatus further includes a switching unit operable to switch a reception frequency of the receiving unit to the second frequency channel during a period in which no input signals corresponding to the selected service are received. The receiving unit receives input signals on the second frequency channel, and the demodulating unit demodulates the received input signals on the second frequency channel. In addition, the extracting unit extracts zapping data related to the input signals on the second frequency channel based on a result of demodulating the input signals on the second frequency channel, and the memory stores the zapping data.

Still further, according to the present invention, the data corresponding to the services include video data. It is noted that the zapping data are still image data included in the video data.

Yet further, according to the present invention, the data corresponding to the services include video data. It is noted that the zapping data are auxiliary information related to the video data.

Yet further, according to the present invention, the auxiliary information includes title information of the video data or service program information. Such auxiliary information may include categories of services, event information related to contents of video data or text style information indicating service information such as "electrical service guide".

According to the present invention, a user may acquire and store zapping data related to services other than the presently watching one unconsciously, and acquisition of such zapping data are performed during off time periods in which no signals corresponding to the service presently being watched by the user that are transmitted in form of bursts are received. With this arrangement, when the user switches to a service other than the one that the user is actually presently watching, it is possible to display and provide the preliminarily acquired zapping data to the user. The user needs not await display of a desired service upon completion of a switching operation to the desired service. More particularly, zapping data can be displayed immediately after the user switches to another service even prior to reception of signals of the switched service that are transmitted in form of bursts. With this arrangement, the user may immediately select a service that the user wishes to watch next.

### BRIEF DESCRIPTION OF THE DRAWINGS

The present invention will become readily understood from the following description of preferred embodiments thereof made with reference to the accompanying drawings, in which like parts are designated by like reference numeral and in which:
Fig. 1 is a pattern diagram showing a frame format of a typical cell structure in a multi-frequency network;
Fig. 2 is a view showing a frame format of DVB-H data that are transmitted as bursts of time slots;
Fig. 3 is a time chart of a case in which a same service is retrieved in an adjacent cell at off time while a mobile terminal is on the move;
Fig. 4 is a block diagram showing a structure of the DVB-H receiver according to the present invention;
Fig. 5 is a schematic view of a case in which a DVB-H receiver can receive DVB-H services from a plurality of channels;
Fig. 6 is a diagram showing examples of DVB-H service data that are transmitted within a plurality of transmission channels; and
Fig. 7 is a flowchart showing reception of the DVB-H receiver according to the present invention.

### DESCRIPTION OF THE PREFERRED EMBODIMENTS

The present invention relates to improved transmission of DVB-H services enabling background reception for currently proposed DVB-H transmission services.

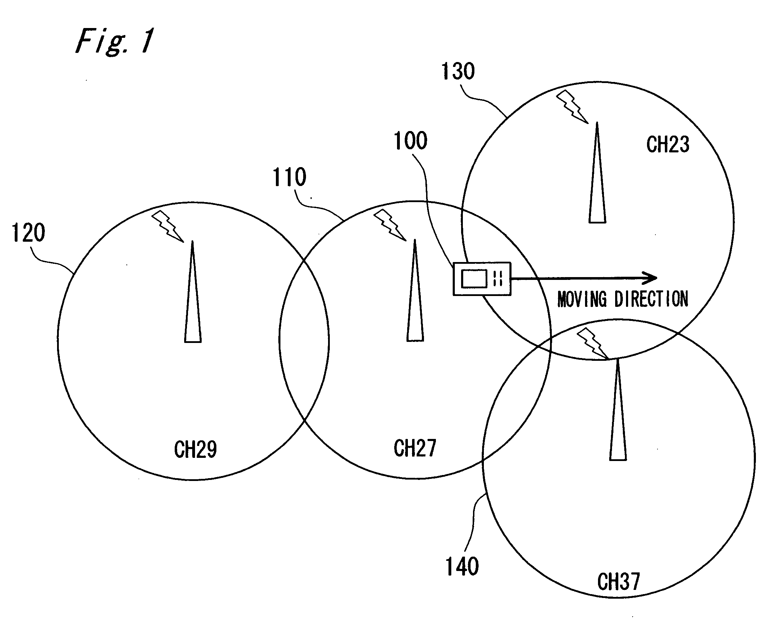

DVB-H services are transmitted within the same transmission channels as those for transmitting DVB-T services. Different transmission channels are disposed in form of a multi-frequency network (MFN). In a multi-frequency network, same DVB-H data are transmitted at different frequencies within adjacent cells. A structure of such a multi-frequency network is illustrated in frame format in Fig. 1.

According to the cell structure of Fig. 1, there are shown four cells within a multi-frequency network. Respective cells 110 to 140 transmit an identical transport stream in which DVB-T and DVB-H are multiplexed in different channels (CH27, CH29, CH23, CH37). A DVB-H mobile receiver 100 including one tuner and a demodulator currently receives DVB-H signals of (CH)27 that are transmitted within a cell 110. Suppose that the DVB-H mobile receiver 100 is moving from the currently used cell 110 to an adjacent cell 130 as shown in Fig. 1. For maintaining reception of the same DVB-H service, the mobile receiver 100 needs to change its reception frequency when entering a transmission area of a new cell, that is, it needs to perform handover.

Handover is performed in an overlapping area between the respective adjacent cells 110, 130. A reception frequency is generally switched based on reception field intensities of a current cell and a new cell. While the field intensity of the current cell decreases, the reception field intensity that is detected at the reception frequency of the new cell will increase as the DVB-H receiver 100 comes closer thereto. In DVB-H services, switching of reception frequency, that is, handover, can be performed unnoticed to the user of the DVB-H service.

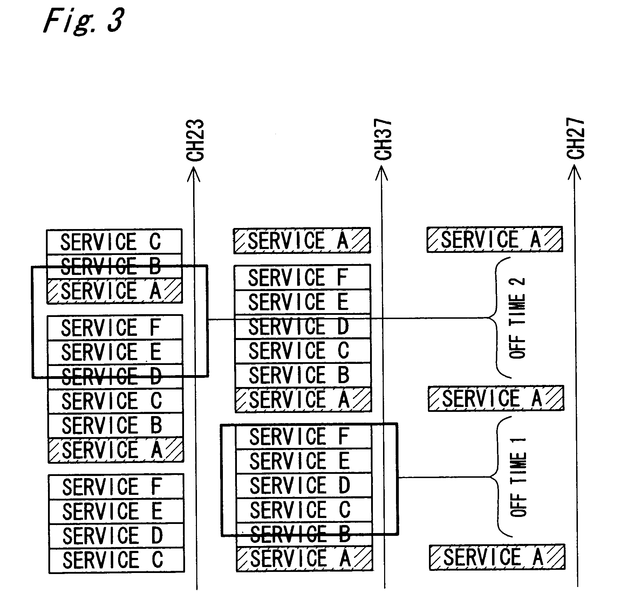

The handover process will be explained with reference to Fig. 3. A receiver 100 moving from cell 110 to cell 130 receives bursts of a part of the services of adjacent cells 130 and 140 during off time of a service A to retrieve whether the same service A can be found. In Fig. 3, the services of cell 140 are received in the first off time 1 and the services of cell 130 are received in the next off time 2. In this case, the same service A could be found in the services of cell 130 so that it is possible to move to reception from cell 130. Such handover is limited to a case where transition is performed to the same service A within an area in which services can be received in an overlapping manner between adjacent cells.

The DVB-H mobile receiver 100 which is assembled with one tuner and a single demodulator can further perform background reception to access information of other DVB-H services without notification for improving convenience for the user. As will be described later, it is possible to cut the waiting time of the user when switching to a different DVB-H service through additionally acquired information.

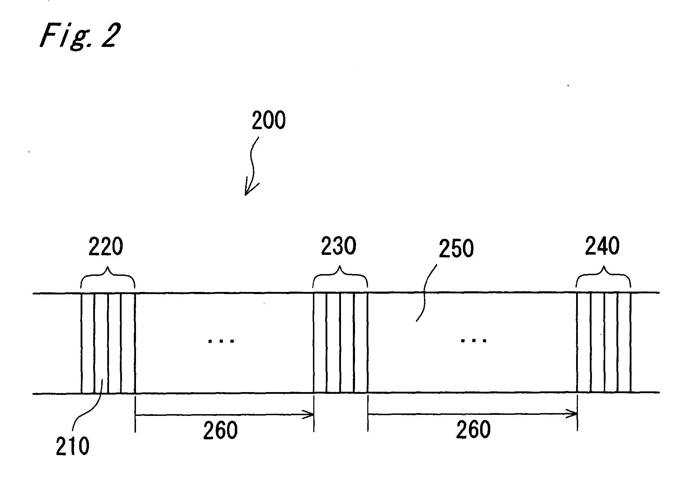

For instance, as shown in Fig. 2, the DVB-H data are transmitted in a multiplexed manner on a single DVB-T transmission channel. As shown in Fig. 2, the DVB-H data are transmitted as time slices, that is, bursts 220, 230 and 240 in a time division multiplex system on the transmission channel 200. Each of the bursts 220, 230, and 240 typically include data of approximately 2M bits (256K bytes). The burst time required for transmitting the burst data are approximately 140 ms where 16QAM is used. The respective bursts include video or audio and/or other data, wherein the other data fill the off times 260 of approximately 5 seconds during which no burst data are transmitted. Depending on the data amount that are transmitted through an inner bandwidth and the bursts 220 to 240, the burst time, that is, the time required from the start to end of the burst is largely varied. The burst time is calculated by dividing the burst size (total bit number) by the bandwidth of the burst (transmission rate per second). There are cases in which correction factors are considered for compensating overhead that has been caused through the carrier packet of DVB-T services.

While the above descriptions were related to a case in which DVB-H services are multiplexed and transmitted as DVB-T services, it is also possible to transmit a plurality of different DVB-H data streams through time division multiplexing through a single transmission channel. Burst parameters such as burst size, burst time, burst bandwidth and off time frequently vary between different data streams.

Synchronization between the transmitter and the DVB-H receiver is performed by newly starting time measurement of the receiver each time a new burst is received. Accordingly, the time accuracy of the receiver is obtained by merely filling single off times.

According to the receiver of the present invention, background reception enables an access to different types of information transmitted in an identical transmission channel and/or other transmission channels, and particularly Sl (service information) for DVB-H use such as event information or status information that are provided by other services are acquired background. While Sl for DVB-H use has not been particularly regulated, it is estimated that they resemble service information tables that are currently used for DVB-T.

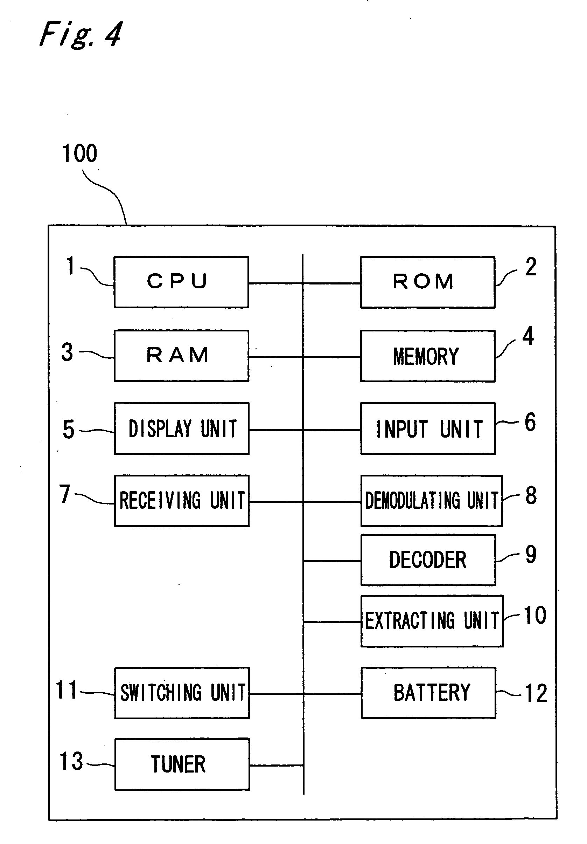

Fig. 4 is a block diagram showing the structure of the receiver 100 according to the present invention. The receiver 100 receives DVB-H services that are transmitted as a plurality of first bursts in which the first data are time divided on the transmission channel and separated on a time axis. The receiver 100 is also a receiver that is capable of utilizing DVB-H services that are transmitted as a plurality of second bursts in which the second data are time divided on the same transmission channel or on a second transmission channel and separated on the time axis. With this receiver 100, information on other services is received background during off time of the first burst of the first data and stored as zapping data on a memory. When switching to another service, while at maximum a time corresponding to the entire off time, that is 5 seconds in the present embodiment, was conventionally required, this receiver can access the zapping data that are preliminarily stored in the memory so that the time required for acquiring information on other services can be remarkably reduced.

The receiver includes a CPU 1, a ROM 2, a RAM 3, a memory 4, a display unit 5, an input unit 6, a receiving unit 7, a demodulating unit 8, a decoder 9, an extracting unit 10, a switching unit 11, a battery 12, and a tuner 13. The CPU 1 controls the entire apparatus. Where first signals corresponding to a first service and second signals corresponding to a second service are transmitted in form of bursts respectively on a time axis within the same transmission channel, the receiving unit 7 receives the first signals where the currently selected service is the first service. The demodulating unit 8 demodulates the first signals received by the receiving unit 7. The decoder 9 decodes the first signals that have been demodulated in the demodulating unit 8 and outputs the demodulated data to the display unit 5. Next, during a period of time in which no first signals are received, the receiving unit 7 receives the second signals. The demodulating unit 8 demodulates the received second signals. Further, the decoder 9 decodes the demodulated second signals. The extracting unit 10 extracts data for zapping based on demodulated data or decoded data with respect to the received second signals. The memory 4 stores the extracted zapping data as zapping data related to the second service. In this respect, the memory 4 may be either a memory within the receiver 100 or a detachable memory or another memory medium. The tuner 13 performs synchronization between the transmitter and the receiver 100. The input unit 6 accepts selection of services by the user. When third signals are transmitted to a transmission channel other than the transmission channel to which the first signals and second signals are transmitted, the switching unit 11 switches the tuner to a frequency of the transmission channel through which the third signals are transmitted during a period of time in which no first signals are received, and the receiving unit 7 receives the third signals. Processes performed for the received third signals are identical to those as described above with respect to the second signals so that detailed explanations thereof will be omitted.

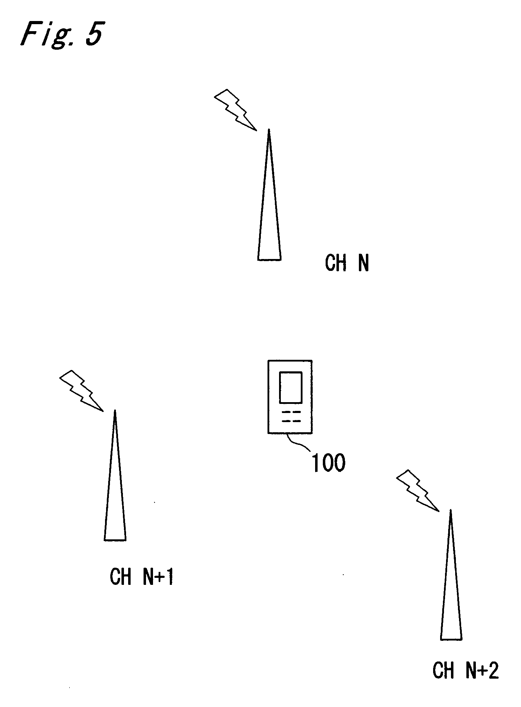

Fig. 5 is a schematic view in which the receiver 100 can utilize a plurality of DVB-H services from a plurality of channels (CH N, CH N+1, CH N+2) within the same cell. According to the receiver 100 of the present invention, when one service is to be utilized from one transmission channel from among the plurality of channels, it is possible to receive other information of other services background during off time of that service, the user may easily utilize that information when switching to the other service.

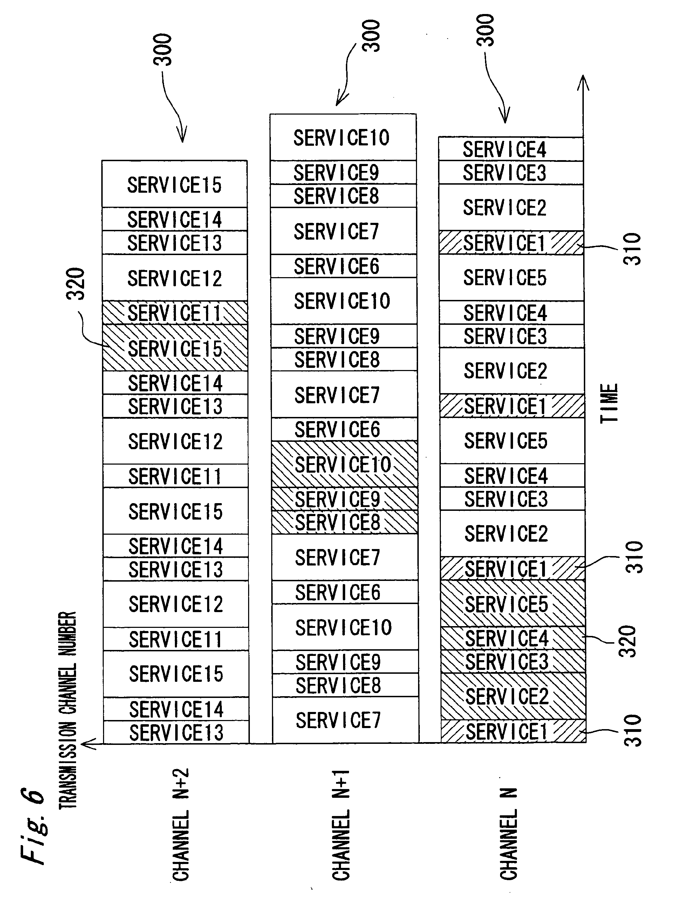

Examples of various DVB-H services that are transmitted on a plurality of channels are illustrated in Fig. 6. As for each of the shown channels N, N+1 and N+2, bursts for respective specific services are transmitted at constant intervals.

As shown in Fig. 6, channel N transmits bursts 310 of service 1 at constant intervals. Between these bursts 310, bursts 320 of other services, that is, service 2, service 3, service 4 and service 5 are transmitted. This transmission system is repeatedly continued. Similarly, services 6 to 10 are transmitted on channel N+1 and services 11 to 15 on channel N+2.

According to the example as shown in Fig. 6, the service 1 indicates a currently selected DVB-H service. The data of the service 1 are extracted from bursts 310 that are transmitted on the channel N at constant intervals.

It is also possible to switch the power of the receiving unit of the DVB-H off between the intervals of the bursts 310 for the purpose of reducing power consumption of the batteries. Alternatively, background reception is performed for extracting information related to other DVB-H services upon accessing to a plurality of other services between the bursts.

As shown in Fig. 6, the first off time is utilized for accessing to other services that are transmitted on the same transmission channel N, that is, service 2, service 3, service 4 and service 5. During the second off time, the DVB-H receiver extracts information from the services 8, 9 and 10 that are transferred on the channel N+1. At the following off time, information related to services 11 to 15 are extracted from channel N+2.

When services that are transmitted within different channels N, N+1 and N+2 are not in synchronization with each other, services that overlap with the service 1 within the transmission channel N+1 and N+2 may also be accessed during the following off time. It is possible to evaluate the entire UHF bandwidth through this method so that information of all services can be collected and stored in the receiver. When the user sends out an instruction of switching to another service, the preliminarily stored decoded information is immediately extracted from the memory of the receiver and is displayed to the user.

On the basis of access with respect to other service, types of services and information that are supposed to be useful for instructing current contents that are delivered thereto are extracted. The extracted information is stored in the receiver.

The stored information is used for filling the long switching time of the DVB-H system. On the basis of the present invention, the viewer may immediately determine whether the newly selected service is a desired one or whether it is necessary to further switch to another service. This switching can be performed without awaiting the first burst of the newly selected service. When switching to a service that is provided on a different transmission channel, the waiting time further includes a synchronization step of switching to another transmission channel. The convenience of the user may be considerably improved by using the present invention.

For continuously updating service information stored in an internal memory of the receiver, the receiver frequently acquires and updates the stored service information. Such updating operations can be repeatedly performed for all DVB-H services that are currently available. Such updating operations can also be performed based on power capacity of batteries or preference of the user and other factors.

A typical example of operations that are performed during background reception is acquisition of snapshots from other DVB-H services. The snapshots are preferably obtained from all currently available DVB-H services including video data or preliminarily selected ones from among all effective services. The snapshot is a video image of a particular one from among currently transmitted DVB-H video services. When switching to other DVB-H video services on the same channels or other transmission channels, data of the respective snapshots are immediately displayed to the viewer as zapping data. I pictures and similar of video images are selected as those snapshots.

Fig. 7 shows a flowchart. Referring to the transmission system of Fig. 6, one method for receiving DVB-H data will now be explained.
(a) A particular DVB-H service (transmission channel) is selected (Step S10). In this case, Service 1 of channel N is selected. The Service 1 includes first video signals.
(b) The receiving time of bursts of the DVB-H video data are determined (Step S20).
(c) Bursts including DVB-H data are received in accordance with the determined transmission system (Step S30), and DVB-H data (video signals) are extracted from the bursts (Step S40). In this example, a first burst of Service 1 is received and a first video signal is extracted.
(d) The receiver switches to the same transmission channel or another transmission channel during off times of the bursts 310 (Step S50). In this example, it switches to the same transmission channel during the first off time, to channel N+1 during the next off time, and further to channel N+2 during the off time after that.
(e) Bursts of other DVB-H services that are transmitted on the same transmission channel or other transmission channels are received (Step S60). In this example, time slots of service 2, service 3 and service 4 are received from the same transmission channel, services 8 to 10 within channel N+1 are received during the next off time, and services 15 and 11 within channel N+2 during the off time after that.
(f) The receiver preferably extracts information such as service information or auxiliary information such as snapshot data from other DVB-H services for acquiring all or preliminarily selected DVB-H services that are currently provided (Step S70).
(g) Pieces of information acquired from other DVB-H services are stored in the memory of the receiver (Step S80). This memory may either be a memory provided interior of the receiver or a detachable memory.
(h) Switching is performed to another service different from that selected in Step S10 (Step S90). A waiting time is merely required for immediately reading out from the memory and display of information related to the corresponding already acquired DVB-H service (Step S100).
(i) Data within the internal memory of the receiver are displayed until the first burst of the newly selected DVB-H service is received.

As shown in Fig. 6, a plurality different DVB-H services is transmitted using the currently receiving channel or other channels. In a preferred example, it is possible to access to all available different services for acquiring information on delivered data. However, in case of a battery-type receiver, it is also possible to access only a selected number of other services during background receipt to store those in the memory of the receiver since the battery capacity is limited. It is also possible to prolong the time intervals for accessing to other services for prolonging updating internals for data of respective services.

Where the number of other services that are monitored by the receiver is limited, the receiver stores a preliminarily determined list of services for access. This "service list" indicates services the user is fond of. The service list is either edited by the user himself/herself or automatically created.

On the basis of this list, the receiver performs background reception by switching to other services during off times in accordance with the "service list". Other services are accessed upon considering whether they are easily accessible, and upon first accessing a service provided on the same transmission channel N, switching to services transmitted on other channels is performed. The extracted information is updated through suitable methods. Alternatively, the "service list" indicates priorities of respective services. On the basis of such priorities, services of higher priority are scanned prior to scanning services of lower priority. Both of the number of services and priorities thereof included in the "service list" are created automatically and a continuously stored in the memory of the receiver. For this reason, the currently selected service and the time of the selected service is monitored and evaluated. The receiver creates a service list that is agreeable to the user based on properties of acquired preferred services.

For completing automatic creation of the service list, the receiver counts the number of times particular services are selected and periods of time the particular services are selected. On the basis of the detected service selection history, most preferred services and not preferred services are determined.

For determining which of the services are more preferred than other services, the receiver may particularly consider either the receiving time alone or the weight put on past results may be lowered.

On the basis of keywords defined by the user, information that has been acquired during background reception can be evaluated, and where coincidence between keywords and stored information is detected, preliminarily defined operations are started. Upon detection of coincidence, the receiver may insert instructions within a currently displayed image or within a preliminarily designated area on a screen outside of the image area. Such instructions may be the keywords themselves but also acquired text information or IDs of other services. Text information can be easily extracted from commonly transmitted HTML files, Java (registered trademark) text files, teletexts (teletext broadcasting) or similar text sources.

Upon notifying the user that coincidence has been detected, the receiver may switch to the other service of which coincidence has been detected upon confirmation of the user, for example, by pressing a preliminarily defined button. Alternatively, upon detection of coincidence, the receiver may immediately interrupt the currently displayed DVB-H service and automatically switch to the service which coincidence has been detected without awaiting confirmation of the user.

Such background receipt can also be used for providing update information to the user irrespective of the currently selected DVB-H service. For instance, it is possible to immediately notify the user of latest scores of a sport event, latest news related to particular topics or latest prices on the stock market.

Moreover, broadcast of desired contents related to other services can also be detected and notified to the user in advance. For this purpose, it is also possible to overlap a text that reads "next event: world news start in 2 minutes on channel 3" onto currently displayed DVB-H services.

In summary, the present invention relates to a battery-type DVB-H mobile receiver. DVB-H service data are transmitted as bursts on transmission channels. The burst are transmitted at intervals including off times of several seconds between. Such off times are utilized for background reception. Pieces of information related to other services are acquired during background reception and stored in the memory of the receiver. When the user switches to another service, stored information related to the service is immediately displayed for filling the time until the first burst of the new service is received. The acquired information may include texts or still images. In the background reception system, it is suffice to use a single tuner/demodulator within the receiver for scanning other services and preferably updating the acquired information. Updating of respective services that are switched during background reception and possible acquisition information is performed depending on current battery conditions, equipments of the receiver and/or preference of the user.

As described above, while the present invention has been explained in details based on a preferred embodiment thereof, the present invention is not limited to those, and it is obvious to a person with ordinary skill in the art that various preferred modifications and corrections within the technical scope of the present invention as recited in the following claims are possible.

In this respect, the present invention may assume the following structure as indicated in the various forms of embodiment. According to a first structure, there is provided a method of receiving the first data from a transmission channel that transmits the first data in form of bursts, wherein the bursts (220 to 240) are transmitted on a transmission channel (110) at intervals (260), and second data are transmitted on the same transmission channel (110) between intervals of the bursts (220 to 240) and/or on other transmission channels in form of bursts. The method includes:
extracting the first data from the bursts (220 to 240) transmitted on the transmission channel (110);
switching from reception of the first data to reception of the second data that are transmitted on the same channel or other channels in form of bursts at intervals during which no burst of the first data are transmitted;
extracting information from the second data (S70); and
storing the extracted information (S80).

According to a second structure, there is provided a receiver for receiving the first data from a transmission channel (110) that transmits the first data in form of bursts (220 to 240). Then, the bursts (220 to 240) are transmitted on the transmission channel (110) at intervals (260), and second data are transmitted on the same transmission channel (110) between intervals of the bursts (220 to 240) and/or on other transmission channels in form of bursts. The apparatus includes:
a first extracting unit operable to extract the first data from the bursts (220 to 240) transmitted on the transmission channel (110),
a switching unit operable to switch from reception of the first data to reception of the second data that are transmitted on the same channel or on the other channels (110) in form of bursts during times in which no burst of the first data are transmitted,
a second extracting unit operable to extract information from the second data (S70), and
a storing unit operable to store the extracted information (S80).

## Claims

1. A receiving method for receiving a signal corresponding to a service selected among a plurality of services according to a plurality of input signals respectively including information related to a plurality of data respectively corresponding to the plurality of services, wherein the plurality of input signals are respectively transmitted on a first frequency channel on a time axis in form of bursts,
the method comprising:
receiving an input signal corresponding to the selected service;
outputting the received input signal after demodulation;
receiving an input signal corresponding to a service other than the selected one during a period of time in which no input signal corresponding to the selected service is received;
demodulating the received input signal corresponding to the service other than the selected one;
extracting zapping data related to the service other than the selected one based on a result of demodulation of the input signal corresponding to the service other than the selected one; and
storing the zapping data.

2. The receiving method according to claim 1, when a selection of a service is changed, the stored zapping data corresponding to the changed service is output.

3. The receiving method according to claim 2, when an input signal corresponding to the changed service is received during output of the stored zapping data corresponding to the changed service, the received input signal corresponding to the changed service is output after demodulation.

4. The receiving method according to any one of claims 1 to 3, wherein receiving an input signal corresponding to a service other than the selected one is performed during a period of time in which no input signal corresponding to the selected service is received and at a predetermined cycle, and the stored zapping data are updated.

5. The receiving method according to any one of claims 1 to 4, wherein the plurality of input signals further include a plurality of signals that are respectively transmitted in form of bursts on a second frequency channel that is different from the first frequency channel on a time axis,
the method further comprising:
switching to the second frequency channel during a period in which no input signal corresponding to the selected service is received;
receiving an input signal on the second frequency channel;
demodulating the received input signal on the second frequency channel;
extracting zapping data related to the input signal on the second frequency channel based on a result of demodulation of the input signal on the second frequency channel; and
storing the zapping data.

6. The receiving method according to any one of claims 1 to 5, wherein the data corresponding to the service includes video data, and the zapping data are still image data included in the video data.

7. The receiving method according to any one of claims 1 to 5, wherein the data corresponding to the service includes video data, and the zapping data are auxiliary information related to the video data.

8. The receiving method according to claim 7, wherein the auxiliary information includes title information or service program information on the video data.

9. The receiving method according to any one of claims 1 to 8, wherein the zapping data includes text data.

10. A receiving apparatus for receiving a signal corresponding to a service selected among a plurality of services according to a plurality of input signals respectively including information related to a plurality of data respectively corresponding to the plurality of services,
wherein the plurality of input signals are respectively transmitted on a first frequency channel on a time axis in form of bursts,
the apparatus comprising:
a receiving unit operable to receive an input signal corresponding to the selected service, wherein the receiving unit receives an input signal corresponding to a service other than the selected one during a period of time in which no input signal corresponding to the selected service is received;
a demodulating unit operable to output the received input signal after demodulation, wherein the demodulating unit demodulates the received input signal corresponding to the service other than the selected one;
an extracting unit operable to extract zapping data related to the service other than the selected one based on a result of demodulation of the input signal corresponding to the service other than the selected one; and
a memory operable to store the zapping data.

11. The receiving apparatus according to claim 10, when a selection of a service is changed, the stored zapping data corresponding to the selected service is output.

12. The receiving apparatus according to claim 11, when an input signal corresponding to the changed service is received during output of the stored zapping data corresponding to the changed service, the demodulating unit outputs the received input signal corresponding to the changed service after demodulation.

13. The receiving apparatus according to any one of claims 11 to 12, wherein
a process of receiving the input signal corresponding to the service other than the selected one by the receiving unit is performed during a period of time in which no input signal corresponding to the selected service is received and at a predetermined cycle, and
wherein the memory updates the stored zapping data.

14. The receiving apparatus according to any of claims 10 to 13, wherein the plurality of input signals further include a plurality of signals that are respectively transmitted on a second frequency channel other than the first frequency channel on a time axis in form of bursts,
wherein the apparatus further comprising a switching unit operable to switch a reception frequency of the receiving unit to the second frequency channel during a period of time in which no input signal corresponding to the selected service is received,
the receiving unit receives an input signal on the second frequency channels,
the demodulating unit demodulates the received input signal on the second frequency channel,
the extracting unit extracts zapping data related to the input signal on the second frequency channel based on a result of demodulation of the input signal on the second frequency channel, and
the memory stores the zapping data.

15. The receiving apparatus according to any of claims 10 to 14, wherein the data corresponding to the service includes video data, and the zapping data are still image data included in the video data.

16. The receiving apparatus according to any of claims 10 to 14, wherein the data corresponding to the service includes video data, and the zapping data are auxiliary information related to the video data.

17. The receiving apparatus according to claim 16, wherein the auxiliary information includes title information or service program information on the video data.

18. The receiving apparatus according to any of claims 10 to 17, wherein the zapping data includes text data.
